# EUROPÄISCHE PATENTSCHRIFT

(11) **EP 2 762 428 B1**
(45) Veröffentlichungstag und Bekanntmachung des Hinweises auf die Patenterteilung: **26.04.2017**
(21) Anmeldenummer: 14151029.7
(22) Anmeldetag: 14.01.2014
(51) Int. Cl.: B65G 57/00, B65G 57/24

(54) **Verfahren und Vorrichtung zum Palettieren von Stückgut-, Artikel- und/oder Gebindelagen**
Method and device for palletising goods, items and/or layers of containers
Procédé et dispositif de palettisation de couches de produits, d'articles et/ou de récipients

(30) Priorität: 04.02.2013 DE 102013101086
(43) Veröffentlichungstag der Anmeldung: 06.08.2014
(73) Patentinhaber: Krones Aktiengesellschaft, 93073 Neutraubling (DE)
(72) Erfinder: Beer, Erhard, 93073 Neutraubling (DE); Osterhammer, Martin, 93073 Neutraubling (DE); Schweighofer, Georg, 93073 Neutraubling (DE)
(74) Vertreter: Benninger, Johannes

(56) Entgegenhaltungen:
- EP-A1- 0 452 560
- EP-A1- 0 893 379
- EP-A1- 2 112 101
- EP-A1- 2 243 731

## Beschreibung

Die vorliegende Erfindung betrifft ein Verfahren zum Palettieren von Stückgut-, Artikel- und/oder Gebindelagen mit den Merkmalen des unabhängigen Verfahrensanspruchs 1. Weiterhin betrifft die Erfindung eine Palettiervorrichtung zum übereinander Stapeln von Stückgut-, Artikel- und/oder Gebindelagen unter Trennung einzelner Lagen oder Lagenpakete mit zwei oder mehr Lagen mit Zwischenlagen aus Flachmaterial wie Pappe, Kunststofffolie o. dgl. mit den Merkmalen des Anspruchs 7.

Beim Palettieren von Stückgut, Stapelgut, Gebinden o. dgl. werden mehrere Stückgut-, Artikel- oder Gebindelagen übereinander auf einem Beladeplatz wie bspw. einer Palette gestapelt, so dass der komplette Stapel nach seiner Fertigstellung vom Stapelplatz entnommen und für die weitere Handhabung bzw. den weiteren Transport zur Verfügung steht. Um die Stabilität solcher Stapel zu erhöhen, ist es üblich, zwischen die einzelnen Stückgut-, Artikel- oder Gebindelagen sog. Zwischenlagen aus Karton, Kunststofffolie oder einem anderen geeigneten Material einzulegen. Nachdem eine Stückgut-, Artikel- oder Gebindelage auf dem Beladeplatz bzw. einem bereits vorhandenen Stapel abgelegt ist, kann eine Zwischenlage aufgelegt werden.

So zeigt die DD 209 422 A ein Verfahren zum Einlegen von Zwischenlagen beim automatischen Palettieren von Stückgut. Dabei soll ein Palettierroboter in einem schnellstmöglichen Palettierzyklus betrieben werden können, der durch die Zwischenlagenzuführung nicht beeinträchtigt wird. Die Zwischenlagen werden mittels eines einfachen Manipulators automatisch und höhenvariabel von einer bereitgestellten Palette abgenommen und in einem nicht in den Arbeitsraum des Palettierroboters eingreifenden, freien Positionierraum auf die Ablagehöhe positioniert. Zu einem für den Palettierzyklus freien Zeitpunkt werden die Zwischenlagen zeitoptimiert über die Stapellage transportiert und abgelegt.

Die DE 10 2008 015 278 B4 offenbart eine gattungsgemässe Palettiervorrichtung, bei der Zwischenlagen während eines Stapelvorganges eingebracht werden. Da der Stapelplatz von vorne und von oben frei zugänglich ist, können mittels einer Einlegevorrichtung, bspw. in Gestalt eines Greifarmes oder Roboterarmes, die Zwischenlagen aus Pappe oder anderem geeigneten Material auf eine abgesetzte Stückgutschicht gelegt werden, bevor die nächste Stückgutschicht auf die Zwischenlage abgelegt wird.

Den bekannten Verfahren gemeinsam ist die seitliche Zuführung und Ablage der Zwischenlagen auf stationäre Stückgutlagen, woraus Verzögerungen entstehen können, die aus den teilweise relativ großen Distanzen zwischen den Positionen der Zwischenlagenstapel und der Stückgutstapel resultieren. Die Handhabungs- und Zuführeinrichtungen für die Zwischenlagen dürfen nicht mit den Förder- und Handhabungseinrichtungen für den Stückgut-, Artikel- oder Gebindetransport kollidieren, so dass ein gewisser Sicherheitsabstand, sowohl in räumlicher als auch in zeitlicher Hinsicht, einzuplanen ist.

Da diese Sicherheitsabstände die Effektivität des Stapelvorganges und seine Geschwindigkeit beeinträchtigen können, besteht ein vorrangiges Ziel der Erfindung darin, die Prozesse beim räumlich und zeitlich aufeinander abgestimmten Stapeln von Stückgutlagen, Artikel- und/oder Gebindelagen und dem Einlegen von Trenn- oder Zwischenlagen zwischen einzelne dieser Stückgut-, Artikel- und/oder Gebindelagen zu optimieren, insbesondere durch aufeinander abgestimmte Bewegungen der verschiedenen Handhabungseinrichtungen, so dass einerseits Kollisionen vermieden, andererseits jedoch freie Räume zum schnelleren Einlegen von Zwischenlagen genutzt werden können.

Dieses Ziel der Erfindung wird mit den Gegenständen der unabhängigen Ansprüche erreicht. Merkmale vorteilhafter Weiterbildungen der Erfindung lassen sich den abhängigen Ansprüchen sowie den Ausführungsbeispielen entnehmen. So schlägt die vorliegende Erfindung zur Erreichung des oben genannten Ziels ein Verfahren zum Palettieren von Stückgut-, Artikel- und/oder Gebindelagen vor, bei dem diese lagenweise oder in zwei oder mehr übereinander befindlichen Lagenpaketen nacheinander übereinander gestapelt werden, wobei jeweils zwischen einzelne Lagen oder Lagenpakete trennende Zwischenlagen aus Flachmaterial wie Pappe, Kunststofffolie o. dgl. eingelegt werden. Optional können auch unterhalb einer zuunterst liegenden Lage und/oder auf einer zuoberst liegenden Lage weitere Zwischenlagen abgelegt werden. Da bei herkömmlichen Verfahren zum Auf- oder Einlegen von Zwischenlagen zur vertikalen Trennung der einzelnen Lagen und zu deren Stabilisierung die Zwischenlagen normalerweise bei bereits abgelegten Stückgut-, Artikel- oder Gebindelagen zugeführt werden, sieht das erfindungsgemäße Verfahren zur Erhöhung der Stapelgeschwindigkeit vor, dass einer seitlichen, schrägen oder kurvenförmigen Zuführbewegung des Flachmaterials der Zwischenlage eine vertikale Hubbewegung überlagert ist, die mit einer Absetz-, Hub- und/oder Seitwärtsbewegung einer auf einem vorhandenen Lagenstapel abzulegenden Stückgut-, Artikel- und/oder Gebindelage bzw. eines abzulegenden Lagenpakets korrespondiert und/oder zumindest phasenweise mit dieser Absetz-, Hub- und/oder Seitwärtsbewegung synchronisiert ist. Die Zwischenlage wird auf diese Weise bereits zugeführt, wenn der Absetz- oder Stapelvorgang für die einzelne Stückgut-, Artikel- oder Gebindelage noch nicht abgeschlossen ist, wodurch sich überlagernde Bewegungen ergeben, die insgesamt zu einer Zeitersparnis beim Stapelvorgang führen können.

Bei dem Verfahren ist vorgesehen, dass sich die Zuführbewegungen für das Flachmaterial der Zwischenlage und die Absetz-, Hub- und/oder Seitwärtsbewegung einer Stückgut-, Artikel- und/oder Gebindelage bzw. eines abzulegenden Lagenpakets zumindest abschnittsweise räumlich und zeitlich überdecken. Mit der Zuführung der Zwischenlage muss somit nicht mehr gewartet werden, bis eine einzelne Lage oder ein Lagenpaket abgelegt und der Stapelplatz freigegeben ist. Stattdessen kann mit geeigneten Bewegungsverläufen für die Zuführeinrichtung für das Flachmaterial der Zwischenlage eine abgestimmte Bewegung der verschiedenen Handhabungseinrichtungen vorgesehen sein, wodurch die Zwischenlagen deutlich früher zum Stapelplatz gebracht werden können als dies bei bisher praktizierten Stapelverfahren der Fall war. In diesem Zusammenhang muss darauf geachtet werden, dass bei den Zuführbewegungen für das Flachmaterial der Zwischenlage jegliche Kollisionen mit den Artikeln, Stückgütern oder Gebinden sowie mit allen anderen vorhandenen Handhabungseinrichtungen vermieden werden. Dies kann dadurch erreicht werden, dass die Zuführung der Zwischenlagen hinsichtlich einer zeitoptimierte Absetz-, Hub- und/oder Seitwärtsbewegung einer Stückgut-, Artikel- und/oder Gebindelage bzw. eines abzulegenden Lagenpakets abgestimmt und/oder dieser untergeordnet ist.

Zur Sicherstellung einer zeitoptimierten Stapelung der Stückgut-, Artikel- und/oder Gebindelagen und zur Vermeidung von Kollisionen können die Zuführbewegungen für das Flachmaterial der Zwischenlage und die Absetz-, Hub- und/oder Seitwärtsbewegung einer Stückgut-, Artikel- und/oder Gebindelage bzw. eines abzulegenden Lagenpakets über ein Achskoordinatensystem miteinander gekoppelt sein, das die Bewegungen synchronisiert und/oder priorisiert. Dieses Achskoordinatensystem kann ggf. über geeignete Sensoren ergänzt sein, deren Ausgangssignale dazu eingesetzt werden, die Zuführbewegungen noch besser zu koordinieren und/oder Kollisionen zu vermeiden.

Bei dem erfindungsgemäßen Verfahren kann die Zwischenlagen insbesondere einzeln mittels eines hubwerkgeführten Schwenkarms von einem Zwischenlagenstapel aufgenommen und während der Absetz-, Hub- und/oder Seitwärtsbewegung einer Stückgut-, Artikel- und/oder Gebindelage bzw. eines abzulegenden Lagenpakets zu deren Stapelplatz bewegt und dort abgelegt werden. In diesem Zusammenhang können die auf den Stapelplatz beförderten Stückgut-, Artikel- und/oder Gebindelagen bzw. Lagenpakete mittels horizontaler Verschiebung und anschließender vertikaler Absetzbewegung abgelegt werden.

Neben dem in verschiedenen Ausführungsvarianten beschriebenen Verfahren umfasst die vorliegende Erfindung eine Palettiervorrichtung zum übereinander Stapeln von Stückgut-, Artikel- und/oder Gebindelagen unter Trennung einzelner Lagen oder Lagenpakete mit zwei oder mehr Lagen mit Zwischenlagen aus Flachmaterial wie Pappe, Kunststofffolie o. dgl. Diese erfindungsgemäße Palettiervorrichtung umfasst eine Förder- und/oder Ablageeinrichtung zur Beförderung der Lagen oder Lagenpakete zu einem Stapelplatz und eine beabstandet vom Stapelplatz angeordnete Zuführ- und Einlegeeinrichtung zur Zuführung der Zwischenlagen zum Stapelplatz und zu deren Ablage auf einer Oberseite einer zuvor abgelegten Stückgutlage, Artikel- und/oder Gebindelage bzw. eines Lagenpakets. Optional können auch unterhalb einer zuunterst liegenden Lage und/oder auf einer zuoberst liegenden Lage weitere Zwischenlagen abgelegt werden, die wahlweise als Boden- bzw. als Toplagen bezeichnet werden, sich jedoch grundsätzlich nicht von den trennenden Zwischenlagen unterscheiden. Weiterhin umfasst die Palettiervorrichtung eine Steuereinrichtung zur kollisionsvermeidenden und/oder zeitoptimierten und/oder phasenweise synchronisierten Koordination der Förder- und Absetzbewegungen der Förder- und Ablageeinrichtung sowie der Hub-, Aufnahme-, Zuführ- und/oder Ablagebewegungen der Zuführ- und Einlegeeinrichtung. Diese Steuereinrichtung sorgt dafür, dass die Zwischenlagen möglichst unter Vermeidung von "Leerzeiten" zugeführt werden, so dass die Zwischenlagen bspw. bereits zu einem Zeitpunkt in Richtung einer abzulegenden Stückgut-, Artikel- oder Gebindelage bewegt werden können, wenn diese entweder noch nicht endgültig abgelegt ist oder wenn sich die Handhabungseinrichtung zum Ablegen der Lage oder des Lagenpakets noch in Bewegung befindet, um die nächste Lage oder das nächste Lagenpaket aufzunehmen und zu stapeln.

Die erfindungsgemäße Palettiervorrichtung ist vorzugsweise in einer Weise konfiguriert, dass sich die Bewegungsräume und/oder -phasen der Zuführbewegungen für das Flachmaterial der Zwischenlage und der Absetz-, Hub- und/oder Seitwärtsbewegung einer Stückgut-, Artikel- und/oder Gebindelage bzw. eines abzulegenden Lagenpakets zumindest abschnittsweise räumlich und zeitlich überdecken, so dass die Palettiervorrichtung gegenüber herkömmlichen Stapelverfahren einen deutlichen Zeitvorteil beim Ablegen und Stapeln von mit Zwischenlagen versehenen Stückgut-, Artikel- und/oder Gebindestapeln liefern kann.

Die Zuführbewegung für das Flachmaterial der Zwischenlage ist derart auf die übrigen Abläufe der Maschine abgestimmt, dass Kollisionen vermieden werden und dass die Zwischenlagen möglichst zeitoptimiert auf die Absetz-, Hub- und/oder Seitwärtsbewegungen einer Stückgut-, Artikel- und/oder Gebindelage bzw. eines abzulegenden Lagenpakets abgestimmt sind und/oder dieser untergeordnet sind. Um dies zu ermöglichen, koppelt die Steuereinrichtung die Zuführbewegungen für das Flachmaterial der Zwischenlage und die Absetz-, Hub- und/oder Seitwärtsbewegung einer Stückgut-, Artikel- und/oder Gebindelage bzw. eines abzulegenden Lagenpakets über ein Achskoordinatensystem in einer Weise miteinander, so dass die Bewegungen synchronisiert und/oder priorisiert sind.

Die Zuführ- und Einlegeeinrichtung für die Zwischenlagen kann in einer sinnvollen Variante der erfindungsgemäßen Palettiervorrichtung bspw. einen hubwerkgeführten Schwenkarm oder ggf. auch zwei oder mehr hubwerkgeführte Schwenkarme umfassen. Ggf. können auf diese Weise die Zwischenlagen von verschiedenen Stapeln von mehreren Seiten zugeführt werden, insbesondere in abwechselnden Bewegungsfolgen.

Die Förder- und/oder Ablageeinrichtung zur Beförderung der Lagen oder Lagenpakete kann bspw. einen Jalousiegreiferkopf oder Plattengreiferkopf o. dgl. umfassen, der die auf den Stapelplatz beförderten Stückgut-, Artikel- und/oder Gebindelagen bzw. Lagenpakete zunächst in horizontaler Richtung verschiebt und anschließender in vertikaler Absetzbewegung ablegt.

Während gemäß bekanntem Stand der Technik flächige Zwischenlagen in Gebinde- oder Artikelstapeln auf stationäre Lagen abgesetzt werden, ermöglicht die vorliegende Erfindung eine schnellere Stapelung, da die Bewegungen des sog. Zwischenlageneinlegers zu einem bewegten Abgabepunkt für Artikel- oder Gebindelagen mit deutlich reduzierten zeitlichen und räumlichen Abständen erfolgen können. So war es bei bekannten Verfahren bisher erforderlich, den Umsetzer für die Artikel- oder Gebindelagen für die nächste Bewegung warten zu lassen, bis die Zwischenlage auf der Lage abgesetzt ist, wobei der Zwischenlageneinleger genügend Abstand zum Umsetzer haben musste, da die verschiedenen Bewegungen des Umsetzers und des Zwischenlageneinlegers nicht gleichzeitig ausgeführt werden konnten, sondern nur mit einem ausreichenden Sicherheitsabstand. Dadurch ist die Gesamtleistung herkömmlicher Palettierer begrenzt. Die Erfindung zeigt nun, dass die Gesamtleistung eines erfindungsgemäßen Palettierers durch gleichzeitige Bewegungen der verschiedenen Handhabungseinrichtungen deutlich erhöht werden kann.

Gemäß der vorliegenden Erfindung kann die in einen zu palettierenden Stapel einzulegende Zwischenlage bereits vor dem Öffnen einer Jalousie eines Greiferkopfes oder einer entsprechenden Handhabungseinrichtung in geringem definierten Abstand über der eingelaufenen und auch der zu erwartenden Lage und oberhalb des Hubwerks des Umsetzers mitfahren bzw. variabel auf diesen Punkt hinschwenken, wobei auch während einer aktiven Bewegung diese Position exakt eingehalten werden kann. Für die Übergabe einer Zwischenlage auf eine Lage auf einer Hubwerksstation unter laufenden Hubwerksbewegungen werden die beiden Hubwerke mittels eines geeigneten Achskoordinationssystems gekoppelt. Abhängig vom jeweiligen Schritt im Verarbeitungszyklus ist diese Achskoordination aktiviert bzw. deaktiviert. Eine Schwenkbewegung und Kopfdrehungsbewegung des Zwischenlageneinlegers zu diesen gemeinsamen Hubwerkspunkten (Offsethöhe zwischen dem Hubwerk für die Zwischenlagen und dem Hubwerk für den Umsetzer) ist ebenfalls während dieser Achskoordination möglich.

Die wesentlichen Vorteile und Verbesserungen gegenüber dem bekannten Stand der Technik sind darin zu sehen, dass das Ablegen einer Zwischenlage auf eine Lage (Gebinde oder Behälter) bereits während einer Hubbewegung oder einer Zuförderbewegung der Gebinde- oder Behälterlage erfolgen kann. Die Zeit für das Palettieren einer Lage kann dadurch verkürzt werden, bzw. wird durch das Einlegen einer Zwischenlage nicht verlängert. Während des Ablegens einer Zwischenlage oder der Abfahrt des Zwischenlageneinlegers müssen andere Achsen (z.B. Hubwerke) nicht warten, bis der Vorgang beendet ist.

Ergänzend sei darauf hingewiesen, dass die Zwischenlagen aus Flachmaterial auch als sog. Bodenlagen oder auch als sog. Toplagen verwendet werden können. So kann bspw. eine auf dem Stapelplatz unterhalb einer zuunterst abgelegten Stückgut-, Artikel- und/oder Gebindelage liegenden Zwischenlage eine Bodenlage bilden. Ebenso kann eine zuoberst auf einem kompletten Stapel mit mehreren Stückgut-, Artikel- und/oder Gebindelagen abgelegte Zwischenlage eine Toplage bilden. Wenn also im vorliegenden Zusammenhang durchgängig von Zwischenlagen die Rede ist, so schließt dies ausdrücklich die Verwendung dieser Zwischenlagen als Bodenlagen und/oder Toplagen mit ein, ohne dass dies gesondert erwähnt wird und ohne dass diese Boden- oder Toplagen entsprechend bezeichnet werden. Die Ablage einer Bodenlage auf eine leere Palette vor Ablage einer ersten Stückgut-, Artikel- und/oder Gebindelage kann als Schutz dienen, woran sich die oben beschriebene erfindungsgemäße Palettierung anschließt. Gleiches gilt grundsätzlich für die sog. Toplage. Nach der Palettierung aller vorgegebenen Lagen kann auf die letzte obere Lage noch eine Zwischenlage abgelegt werden, die als zusätzlicher Schutz vor Schmutz und Staub dienen kann, da die komplette palettierte Palette später oftmals noch mit einer Stretchfolie o.ä. umwickelt wird, so dass die Toplage eine Art von mechanisch robustem Deckel bilden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt in vier schematischen Ansichten aufeinander folgende Stapelvorgänge von Stückgut-, Artikel- oder Gebindelagen auf einem Stapelplatz.
Fig. 2 zeigt eine schematische Darstellung einer Ausführungsvariante einer erfindungsgemäßen Palettiervorrichtung.
Fig. 3 zeigt in zwei schematischen Ansichten Variante einer Palettiervorrichtung gemäß Fig. 2 mit einer (Fig. 3a) oder zwei Zuführeinrichtungen für Zwischenlagen (Fig. 3b).

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

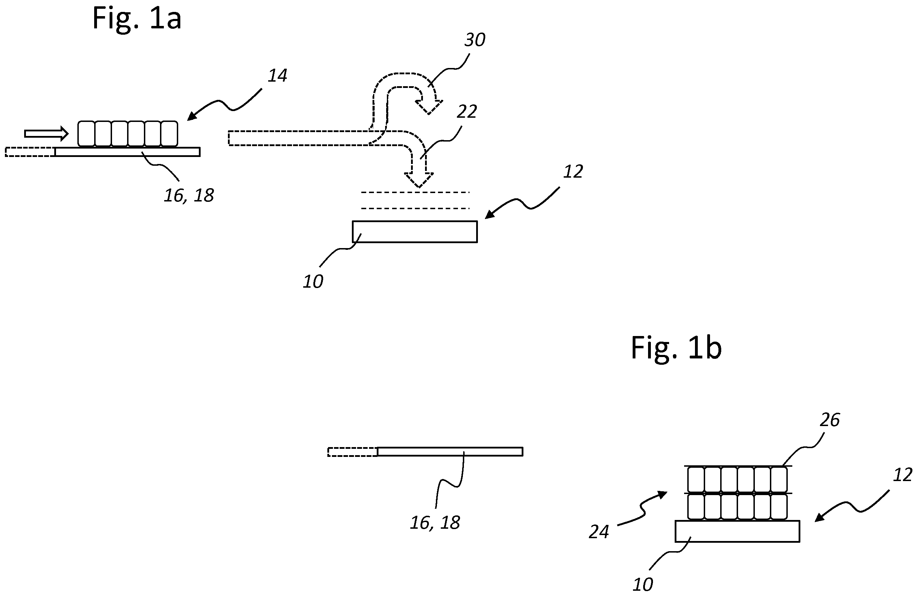

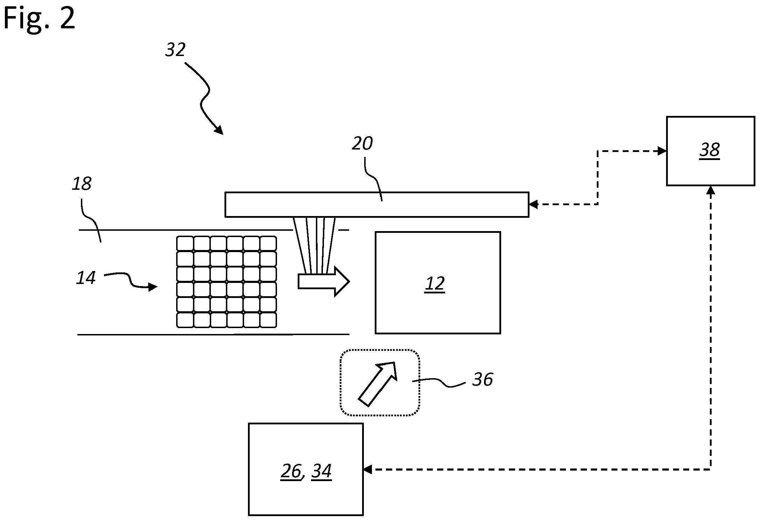

Die vier schematischen Ansichten der Fig. 1a bis 1 d zeigen eine schichtweise Beladung einer Palette 10, die auf einem Stapelplatz 12 steht oder einen Stapelplatz 12 bildet, mit Stückgut-, Artikel- und/oder Gebindelagen 14, die von einem geeigneten Bereitstellungsplatz 16 wie bspw. einer Horizontalfördereinrichtung 18 zur Verfügung gestellt, in Richtung zum Stapelplatz 12 befördert und mittels einer Übersetzeinrichtung in Gestalt einer Förder- und/oder Ablageeinrichtung 20 (vgl. Fig. 2) wie bspw. einem Jalousiegreiferkopf o. dgl. auf die Palette 10 am Stapelplatz 12 überführt werden. Die hier allgemein und die unterschiedlichsten Förderobjekte bezeichnenden Stückgut-, Artikel- und/oder Gebindelagen 14 werden nachfolgend auch verkürzt als Lagen, als Artikellagen, als Stückgutlagen oder als Gebindelagen bezeichnet und jeweils mit der Bezugsziffer 14 gekennzeichnet, ohne dass dabei jeweils andere Lagenvarianten gemeint sind.

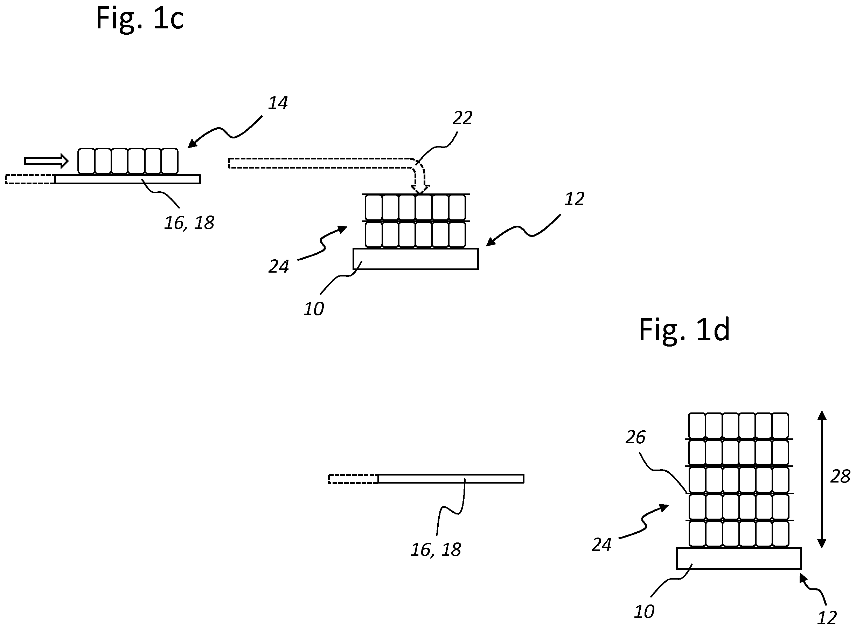

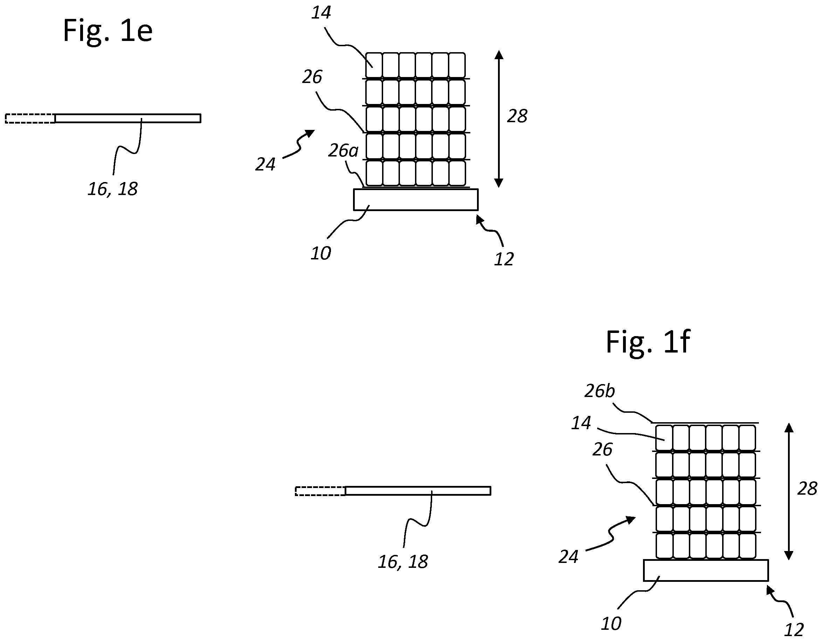

Die schematische Darstellung der Fig. 1a verdeutlicht einen Überführungsweg 22, entlang dem alle Stückgut-, Artikel- und/oder Gebindelagen 14 jeweils nacheinander zum normalerweise etwas tiefer als der Bereitstellungsplatz 16 oder die Horizontalfördereinrichtung 18 liegenden Stapelplatz 12 überführt werden und dort in Stapeln 24 übereinander gestapelt werden (vgl. Fig. 1 b), wobei zwischen jede einzelne Lage 14 zusätzliche Zwischenlagen 26 aus Karton, Kunststoff oder dickerer Kunststofffolie eingebracht sind. Die Zwischenlagen 26 werden normalerweise auf die Oberseite einer zuvor abgelegten Lage 14 aufgelegt, bevor die nächste Lage 14 mit Artikeln, Stückgütern oder Gebinden auf die Zwischenlage 26 abgelegt wird. Wahlweise können auch gleichzeitig zwei oder mehr Lagen 14 als Lagenpakete gleichzeitig auf dem Stapelplatz 12 abgelegt und jeweils durch Zwischenlagen 26 in vertikaler Richtung unterteilt werden, was hier jedoch nicht dargestellt ist. In diesem Fall ist nicht jede einzelne Lage 14 von ihrer in vertikaler Richtung benachbarten Lage 14 durch eine eigene Zwischenlage 26 getrennt.

Der Bereitstellungsplatz 16 kann bspw. von einem unten liegenden Zulauf (nicht dargestellt) mit gruppierten und in eine Lagenformation gebrachten Stückgut-, Artikel- und/oder Gebindelagen 14 oder mit Lagenpaketen mit jeweils mehreren Artikeln, Stückgütern oder Gebinden versorgt werden. Dieser Vorgang kann sich gemäß Fig. 1c und Fig. 1d mehrfach solange wiederholen, bis eine gewünschte Stapelhöhe 28 des Stückgut-, Artikel- und/oder Gebindestapels 24 erreicht ist, die normalerweise eine Höhe aufweist, die oberhalb des Höhenniveaus des Bereitstellungsplatzes 16 liegt. Eine solche Stapelhöhe 28 ist beispielhaft in Fig. 1d dargestellt. Dagegen befindet sich das Niveau des Bereitstellungsplatzes 16 bzw. der Horizontalfördereinrichtung 18 normalerweise oberhalb des Niveaus des Stapelplatzes 12, d.h. ohne darauf gestapelte Stückgut-, Artikel- und/oder Gebindelagen 14. Zur Ablage der oberen Stückgut-, Artikel- und/oder Gebindelagen 14 gemäß Fig. 1d kann nicht mehr der nach unten führende Überführungsweg 22 gemäß Fig. 1a und Fig. 1c gewählt werden, sondern bspw. der höher als das Niveau des Bereitstellungsplatzes 16 bzw. der Horizontalfördereinrichtung 18 verlaufende obere Überführungsweg 30, wie er in Fig. 1a erkennbar ist.

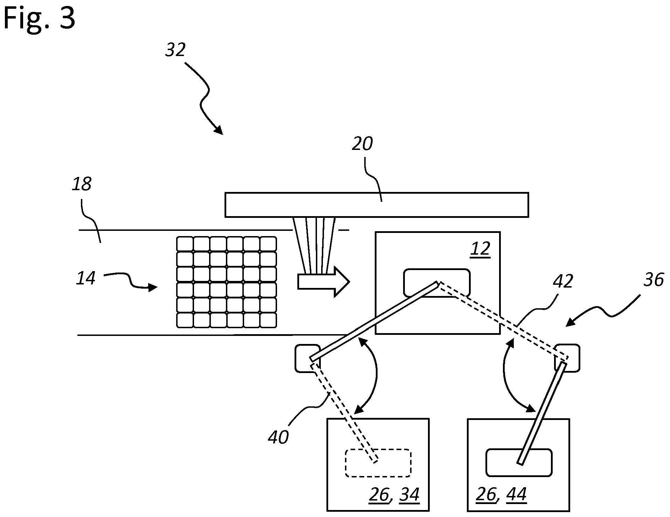

Dass sich die Zuführ- und Ablagebewegungen der Zwischenlagen 26 entsprechend der Erfindung mit den Zuführ- und Ablagebewegungen der Lagen 14 oder Lagenpakete auf dem Stapelplatz 12 bzw. auf der Oberseite eines begonnenen Stapels 24 zumindest phasenweise zeitlich und räumlich überdecken, konnte anhand der Darstellungen der Fig. 1 nicht verdeutlicht werden, wird jedoch anhand der nachfolgenden Erläuterungen, die auf die Figuren 2 bis 4 Bezug nehmen, deutlicher erkennbar.

Die Figuren 1e und 1f zeigen eine weitere Option der vorliegenden Erfindung, bei der die Zwischenlagen 26 aus Flachmaterial auch als sog. Bodenlagen 26a (Fig. 1e) oder auch als sog. Toplagen 26b (Fig. 1f) verwendet werden können. So kann bspw. eine auf dem Stapelplatz 12 unterhalb einer zuunterst abgelegten Stückgut-, Artikel- und/oder Gebindelage 14 liegenden Zwischenlage 26 eine Bodenlage 26a bilden. Ebenso kann eine zuoberst auf einem kompletten Stapel 24 mit mehreren Stückgut-, Artikel- und/oder Gebindelagen 14 abgelegte Zwischenlage 26 eine Toplage 26b bilden. Die in Fig. 1e gezeigte Ablage einer Bodenlage 26a auf einer leeren Palette 10 vor Ablage der ersten Stückgut-, Artikel- und/oder Gebindelage 14 kann als Schutz dienen. Gleiches gilt grundsätzlich für die in Fig. 1f gezeigte Toplage 26b. Nach der Palettierung aller vorgegebenen Lagen 14 kann auf die letzte obere Lage 14 des Stapels 24 noch eine Zwischenlage 26 als Toplage 26b abgelegt werden, die als zusätzlicher Schutz vor Schmutz und Staub dienen kann, da die komplette Palette 10 mitsamt dem fertigen Stapel 24 später oftmals noch mit einer Stretchfolie umwickelt wird, so dass die Toplage 26b einen mechanisch robustem Deckel bilden kann. Wahlweise können eine zusätzliche Bodenlage 26a oder eine zusätzliche Toplage 26b oder auch beide zusätzliche Zwischenlagen 26a und 26b eingesetzt werden.

Die schematische Darstellung der Fig. 2 verdeutlicht die wesentlichen Komponenten einer Palettiervorrichtung 32 zum übereinander Stapeln von Stückgut-, Artikel- und/oder Gebindelagen 14 auf dem Stapelplatz 12, bspw. einer Palette 10 gemäß Fig. 1. Die Lagen 14 werden mittels der Horizontalfördereinrichtung 18 in den Bereich der Förder- und/oder Ablageeinrichtung 20 gebracht, die der Handhabung und Überführung der Lagen 14 zum Stapelplatz 12 dient. Zur Trennung der einzelnen Lagen 14 oder wahlweise der Lagenpakete, bestehend aus zwei oder mehr Lagen 14, dienen die Zwischenlagen 26 aus Flachmaterial wie Pappe, Kunststofffolie o. dgl., die von einem Zwischenlagenstapel 34 entnommen und einzeln dem Stapelplatz 12 zugeführt werden, sobald eine weitere Lage 14 oder ein weiteres Lagenpaket dort abgelegt wurde. Die Palettiervorrichtung 32 umfasst die Förder- und/oder Ablageeinrichtung 20 zur Beförderung der Lagen 14 oder Lagenpakete zum Stapelplatz 12 und eine beabstandet vom Stapelplatz 12 angeordnete Zuführ- und Einlegeeinrichtung 36 zur Zuführung der Zwischenlagen 26 zum Stapelplatz 12 und zur Ablage der einzelnen Zwischenlagen 26 auf einer Oberseite einer zuvor abgelegten Stückgutlage 14, Artikel- und/oder Gebindelage 14 bzw. eines Lagenpakets mit mehreren solcher Lagen 14.

Weiterhin umfasst die Palettiervorrichtung 32 eine Steuereinrichtung 38 zur Steuerung zumindest der Einrichtungen 20 und 36, insbesondere zur kollisionsvermeidenden sowie idealerweise zur zeitoptimierten und/oder phasenweise synchronisierten Koordination der Förder- und Absetzbewegungen der Förder- und Ablageeinrichtung 20 sowie der Hub-, Aufnahme-, Zuführ- und/oder Ablagebewegungen der Zuführ- und Einlegeeinrichtung 36. Diese Steuereinrichtung 38 sorgt dafür, dass die Zwischenlagen 26 möglichst unter Vermeidung von "Leerzeiten" zugeführt werden, so dass die Zwischenlagen 26 bspw. bereits zu einem Zeitpunkt in Richtung einer abzulegenden Stückgut-, Artikel- oder Gebindelage 14 bewegt werden können, wenn diese entweder noch nicht endgültig abgelegt ist oder wenn sich die Handhabungseinrichtung 20 zum Ablegen der Lage 14 oder des Lagenpakets noch in Bewegung befindet, um die nächste Lage 14 oder das nächste Lagenpaket aufzunehmen und zu stapeln.

Die Palettiervorrichtung 32 sowie die dieser zugeordnete Steuereinrichtung 38 sind in einer Weise konfiguriert, dass sich die Bewegungsräume und/oder -phasen der Zuführbewegungen für das Flachmaterial der Zwischenlagen 26 und der Absetz-, Hub- und/oder Seitwärtsbewegung der einzelnen Stückgut-, Artikel- und/oder Gebindelagen 14 bzw. eines abzulegenden Lagenpakets zumindest abschnittsweise räumlich und zeitlich überdecken, so dass die Palettiervorrichtung 32 gegenüber herkömmlichen Stapelverfahren einen deutlichen Zeitvorteil beim Ablegen und Stapeln von mit Zwischenlagen 26 versehenen Stückgut-, Artikel- und/oder Gebindestapeln 14 liefern kann. Die Zuführbewegung für das Flachmaterial der Zwischenlage 26 ist derart auf die übrigen Abläufe der Maschine 32 abgestimmt, dass Kollisionen vermieden werden und dass die Zwischenlagen 26 möglichst zeitoptimiert auf die Absetz-, Hub- und/oder Seitwärtsbewegungen einer Stückgut-, Artikel- und/oder Gebindelage 14 bzw. eines abzulegenden Lagenpakets abgestimmt sind und/oder dieser untergeordnet sind. Um dies zu ermöglichen, koppelt die Steuereinrichtung 38 die Zuführbewegungen für das Flachmaterial der Zwischenlage 26 und die Absetz-, Hub- und/oder Seitwärtsbewegung einer Stückgut-, Artikel- und/oder Gebindelage 14 bzw. eines abzulegenden Lagenpakets über ein Achskoordinatensystem in einer Weise miteinander, so dass die Bewegungen synchronisiert und/oder priorisiert sind.

Die Zuführ- und Einlegeeinrichtung 36 für die Zwischenlagen 26 kann in einer sinnvollen Variante der erfindungsgemäßen Palettiervorrichtung 32 bspw. einen hubwerkgeführten Schwenkarm 40 oder ggf. auch zwei oder mehr hubwerkgeführte Schwenkarme 40 und 42 umfassen. Ggf. können auf diese Weise die Zwischenlagen 26 von verschiedenen Stapeln 34 und 44 von mehreren Seiten zugeführt werden, insbesondere in abwechselnden Bewegungsfolgen. Die Förder- und/oder Ablageeinrichtung 20 zur Beförderung der Lagen 14 oder Lagenpakete kann bspw. einen Jalousiegreiferkopf oder Plattengreiferkopf o. dgl. umfassen, der die auf den Stapelplatz 12 beförderten Stückgut-, Artikel- und/oder Gebindelagen 14 bzw. Lagenpakete zunächst in horizontaler Richtung verschiebt und anschließender in vertikaler Absetzbewegung ablegt.

Mit dem erfindungsgemäßen Palettierverfahren können die Zwischenlagen 26 in zeitoptimierter Weise zwischen Stückgut-, Artikel- und/oder Gebindelagen 14 eingefügt werden, die nacheinander auf dem Stapelplatz 12 abgelegt und übereinander gestapelt werden. So sind die Bewegungsverläufe der Handhabungseinrichtungen 20 und 36 für die Lagen 14 bzw. Zwischenlagen 26 zeitlich und räumlich aufeinander abgestimmt. Während die Handhabungseinrichtung 20 in Richtung zum Stapelplatz 12 bewegt wird und dabei eine Lage 14 auf den Stapelplatz 12 überführt und ablegt, beginnt die Handhabungseinrichtung 36 bereits mit ihrer Bewegung und nimmt eine Zwischenlage 26 auf, bevor die Lage 14 auf dem Stapelplatz 12 abgelegt und die Handhabungseinrichtung 20 zurückgeführt wird. Auf diese Weise überschneiden sich die Bewegungen, wodurch insgesamt Stapelzeit beim Palettieren eingespart werden kann. In diesem Zusammenhang muss darauf geachtet werden, dass bei den Zuführbewegungen für das Flachmaterial der Zwischenlagen 26 jegliche Kollisionen mit den Artikel-, Stückgut- und/oder Gebindelagen 14 sowie mit allen anderen vorhandenen Handhabungseinrichtungen vermieden werden. Dies kann dadurch erreicht werden, dass die Zuführung der Zwischenlagen 26 hinsichtlich einer zeitoptimierte Absetz-, Hub- und/oder Seitwärtsbewegung einer Stückgut-, Artikel- und/oder Gebindelage 14 bzw. eines abzulegenden Lagenpakets abgestimmt und/oder dieser untergeordnet ist.

Zur Sicherstellung einer zeitoptimierten Stapelung der Stückgut-, Artikel- und/oder Gebindelagen 14 und zur Vermeidung von Kollisionen können die Zuführbewegungen für das Flachmaterial der Zwischenlagen 26 und die Absetz-, Hub- und/oder Seitwärtsbewegung einer Stückgut-, Artikel- und/oder Gebindelage 14 bzw. eines abzulegenden Lagenpakets über ein Achskoordinatensystem miteinander gekoppelt sein, das die Bewegungen synchronisiert und/oder priorisiert. Dieses Achskoordinatensystem kann ggf. über geeignete Sensoren ergänzt sein, deren Ausgangssignale dazu eingesetzt werden, die Zuführbewegungen noch besser zu koordinieren und/oder Kollisionen zu vermeiden. Die Steuerung der Handhabungseinrichtungen 20 und 36 erfolgt entsprechend Fig. 2 über die Steuereinrichtung 38.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Palette
- 12: Stapelplatz
- 14: Lage, Stückgutlage, Artikellage, Gebindelage
- 16: Bereitstellungsplatz
- 18: Horizontalfördereinrichtung
- 20: Förder- und/oder Ablageeinrichtung
- 22: Überführungsweg
- 24: Stapel, Gebindestapel, Lagenstapel
- 26: Zwischenlage
- 26a: Bodenlage
- 26b: Toplage
- 28: Stapelhöhe
- 30: oberer Überführungsweg
- 32: Palettiervorrichtung
- 34: Zwischenlagenstapel
- 36: Zuführ- und Einlegeeinrichtung
- 38: Steuereinrichtung
- 40: Schwenkarm
- 42: Schwenkarm
- 44: Zwischenlagenstapel

## Patentansprüche

1. Verfahren zum Palettieren von Stückgut-, Artikel- und/oder Gebindelagen (14), bei dem diese lagenweise oder in zwei oder mehr übereinander befindlichen Lagenpaketen nacheinander übereinander gestapelt werden, wobei unterhalb oder oberhalb einzelner und/oder jeweils zwischen einzelne Lagen (14) oder Lagenpakete trennende Zwischenlagen (26) aus Flachmaterial wie Pappe, Kunststofffolie o. dgl. eingelegt werden, **dadurch gekennzeichnet, dass** einer seitlichen, schrägen oder kurvenförmigen Zuführbewegung des Flachmaterials der Zwischenlage (26) eine vertikale Hubbewegung überlagert ist, die mit einer Absetz-, Hub- und/oder Seitwärtsbewegung einer auf einem vorhandenen Lagenstapel (24) abzulegenden Stückgut-, Artikel- und/oder Gebindelage (14) bzw. eines abzulegenden Lagenpakets korrespondiert und/oder zumindest phasenweise mit dieser Absetz-, Hub- und/oder Seitwärtsbewegung synchronisiert ist.

2. Verfahren nach Anspruch 1, bei dem sich die Zuführbewegungen für das Flachmaterial der Zwischenlage (26) und die Absetz-, Hub- und/oder Seitwärtsbewegung einer Stückgut-, Artikel- und/oder Gebindelage (14) bzw. eines abzulegenden Lagenpakets zumindest abschnittsweise räumlich und zeitlich überdecken.

3. Verfahren nach Anspruch 2, bei dem die Zuführbewegung für das Flachmaterial der Zwischenlage (26) unter Vermeidung von Kollisionen auf eine zeitoptimierte Absetz-, Hub- und/oder Seitwärtsbewegung einer Stückgut-, Artikel- und/oder Gebindelage (14) bzw. eines abzulegenden Lagenpakets abgestimmt und/oder dieser untergeordnet ist.

4. Verfahren nach Anspruch 2 oder 3, bei dem die Zuführbewegungen für das Flachmaterial der Zwischenlage (26) und die Absetz-, Hub- und/oder Seitwärtsbewegung einer Stückgut-, Artikel- und/oder Gebindelage (14) bzw. eines abzulegenden Lagenpakets über ein Achskoordinatensystem miteinander gekoppelt sind, das die Bewegungen synchronisiert und/oder priorisiert.

5. Verfahren nach einem der Ansprüche 1 bis 4, bei dem die Zwischenlagen (26) einzeln mittels wenigstens eines hubwerkgeführten Schwenkarms (40, 42) von einem Zwischenlagenstapel (34, 44) aufgenommen, während der Absetz-, Hub- und/oder Seitwärtsbewegung einer Stückgut-, Artikel- und/oder Gebindelage (14) bzw. eines abzulegenden Lagenpakets zu deren Stapelplatz (12) bewegt und dort abgelegt wird.

6. Verfahren nach einem der Ansprüche 1 bis 5, bei dem die auf den Stapelplatz (12) beförderten Stückgut-, Artikel- und/oder Gebindelagen (14) bzw. Lagenpakete mittels horizontaler Verschiebung und anschließender vertikaler Absetzbewegung abgelegt werden.

7. Palettiervorrichtung (32) zum übereinander Stapeln von Stückgut-, Artikel- und/oder Gebindelagen (14) unter Separierung, Bedeckung und/oder Trennung einzelner Lagen (14) oder Lagenpakete mit zwei oder mehr Lagen (14) mit Zwischenlagen (26) aus Flachmaterial wie Pappe, Kunststofffolie o. dgl., umfassend eine Förder- und/oder Ablageeinrichtung (20) zur Beförderung der Lagen (14) oder Lagenpakete zu einem Stapelplatz (12) und eine beabstandet vom Stapelplatz (12) angeordnete Zuführ- und Einlegeeinrichtung (36) zur Zuführung der Zwischenlagen (26) zum Stapelplatz (12) und zu deren Ablage unterhalb einer danach abzulegenden und/oder auf einer Oberseite einer zuvor abgelegten Stückgutlage (14), Artikel- und/oder Gebindelage (14) bzw. eines Lagenpakets, **gekennzeichnet durch** eine Steuereinrichtung (38) zur Koordination der Förder- und Absetzbewegungen der Förder- und Ablageeinrichtung (20) sowie der Hub-, Aufnahme-, Zuführ- und/oder Ablagebewegungen der Zuführ- und Einlegeeinrichtung (36).

8. Vorrichtung nach Anspruch 7, bei der sich die Bewegungsräume und/oder -phasen der Zuführbewegungen für das Flachmaterial der Zwischenlage (26) und der Absetz-, Hub- und/oder Seitwärtsbewegung einer Stückgut-, Artikel- und/oder Gebindelage (14) bzw. eines abzulegenden Lagenpakets zumindest abschnittsweise räumlich und zeitlich überdecken.

9. Vorrichtung nach Anspruch 8, bei der die Steuereinrichtung (38) die Zuführbewegungen für das Flachmaterial der Zwischenlage (26) und die Absetz-, Hub- und/oder Seitwärtsbewegung einer Stückgut-, Artikel- und/oder Gebindelage (14) bzw. eines abzulegenden Lagenpakets über ein Achskoordinatensystem miteinander koppelt, das die Bewegungen synchronisiert und/oder priorisiert.

10. Vorrichtung nach einem der Ansprüche 7 bis 9, bei der die Zuführ- und Einlegeeinrichtung (36) für die Zwischenlagen (26) wenigstens einen hubwerkgeführten Schwenkarm (40, 42) umfasst.

11. Vorrichtung nach einem der Ansprüche 7 bis 10, bei der Förder- und/oder Ablageeinrichtung (20) zur Beförderung der Lagen (14) oder Lagenpakete einen Jalousiegreiferkopf oder Plattengreiferkopf o. dgl. umfasst, der die auf den Stapelplatz (12) beförderten Stückgut-, Artikel- und/oder Gebindelagen (14) bzw. Lagenpakete zunächst in horizontaler Richtung verschiebt und anschließender in vertikaler Absetzbewegung ablegt.

12. Vorrichtung nach einem der Ansprüche 7 bis 11, bei der eine auf dem Stapelplatz (12) unterhalb einer zuunterst abgelegten Stückgut-, Artikel- und/oder Gebindelage (14) liegenden Zwischenlage (26) eine Bodenlage (26a) bildet, und bei der eine zuoberst auf einem kompletten Stapel (24) abgelegte Zwischenlage (26) eine Toplage (26b) bildet.

## Claims

1. A method for palletising piece goods layers, article layers and/or bundle layers (14), in which method these layers (14) are successively stacked on top of one another layer by layer or in packages of two or more layers on top of one another, wherein separating intermediate layers (26) of a flat material, such as paperboard, plastic film or the like, are inserted underneath or on top of and/or in each case between individual layers (14) or packages of layers, the method **characterised in that** a lateral, transverse or curved feed movement of the flat material of the intermediate layer (26) is superimposed by a vertical lifting movement, which corresponds to a set down movement, lifting movement and/or lateral movement of a piece goods layer, article layer and/or bundle layer (14) to be deposited on an existing layer stack (24) or of a package of layers to be deposited, as the case may be, and/or which is synchronised at least in phases with this set down movement, lifting movement and/or lateral movement.

2. The method as recited in claim 1, in which the feed movements for the flat material of the intermediate layer (26) and the set down movement, lifting movement and/or lateral movement of a piece goods layer, article layer and/or bundle layer (14) or of a package of layers to be deposited, as the case may be, spatially and temporally overlap at least in sections.

3. The method as recited in claim 2, in which, under the avoidance of collisions, the feed movement for the flat material of the intermediate layer (26) is coordinated with and/or subordinated to a time-optimised set down movement, lifting movement and/or lateral movement of a piece goods layer, article layer and/or bundle layer (14) or of a package of layers to be deposited, as the case may be.

4. The method as recited in claim 2 or 3, in which the feed movements for the flat material of the intermediate layer (26) and the set down movement, lifting movement and/or lateral movement of a piece goods layer, article layer and/or bundle layer (14) or of a package of layers to be deposited, as the case may be, are coupled with each other via an axis coordinate system, which synchronises and/or prioritises the movements.

5. The method as recited in one of the claims 1 to 4, in which the intermediate layers (26) are individually picked up from an intermediate layer stack (34, 44) by means of at least one swinging arm (40, 42), which is conducted by a lifting unit, are moved to the stacking location (12) of a piece goods layer, article layer and/or bundle layer (14) or of a package of layers to be deposited, as the case may be, during the set down movement, lifting movement and/or lateral movement of said layers (14), and are deposited there.

6. The method as recited in one of the claims 1 to 5, in which the piece goods layers, article layers and/or bundle layers (14) or packages of layers, as the case may be, which are conveyed onto the stacking location (12), are deposited by way of horizontal displacement and subsequent vertical set down movement.

7. A palletising apparatus (32) for stacking piece goods layers, article layers and/or bundle layers (14) on top of one another, thereby separating, covering and/or dividing individual layers (14) or packages of layers with two or more layers (14) by using intermediate layers (26) of a flat material, such as paperboard, plastic film or the like, the apparatus comprising a conveying device and/or depositing device (20) for conveying the layers (14) or packages of layers to a stacking location (12), and, arranged spaced apart from the stacking location (12), a feeding and inserting device (36) for feeding the intermediate layers (26) to the stacking location (12) and for depositing them underneath a piece goods layer (14), an article layer and/or bundle layer (14) or a package of layers, as the case may be, which is to be subsequently deposited, and/or on the top of a previously deposited piece goods layer (14), article layer and/or bundle layer (14) or of a package of layers, as the case may be, the apparatus **characterised by** a control device (38) for coordinating the conveying movements and set down movements of the conveying and depositing device (20) and for coordinating the lifting movements, pick up movements, feeding movements, and/or depositing movements of the feeding and inserting device (36).

8. The apparatus as recited in claim 7, in which the movement spaces and/or the movement phases of the feed movements for the flat material of the intermediate layer (26) and the set down movement, lifting movement and/or lateral movement of a piece goods layer, article layer and/or bundle layer (14) or of a package of layers to be deposited, as the case may be, spatially and temporally overlap at least in sections.

9. The apparatus as recited in claim 8, in which the control device (38) couples the feed movements for the flat material of the intermediate layer (26) and the set down movement, lifting movement and/or lateral movement of a piece goods layer, article layer and/or bundle layer (14) or of a package of layers to be deposited, as the case may be, with each other via an axis coordinate system, which synchronises and/or prioritises the movements.

10. The apparatus as recited in one of the claims 7 to 9, in which the feeding and inserting device (36) for the intermediate layers (26) comprises at least one swinging arm (40, 42), which is conducted by a lifting unit.

11. The apparatus as recited in one of the claims 7 to 10, in which the conveying device and/or depositing device (20) for conveying the layers (14) or packages of layers comprises a shutter-type gripper head or a panel gripper head or the like, which first displaces in a horizontal direction the piece goods layers, article layers and/or bundle layers (14) or packages of layers, as the case may be, which are conveyed onto the stacking location (12), and deposits them in a subsequent vertical set down movement.

12. The apparatus as recited in one of the claims 7 to 11, in which an intermediate layer (26) laying on the stacking location (12) underneath a bottommost deposited piece goods layer, article layer and/or bundle layer (14) forms a bottom layer (26a), and in which an intermediate layer (26) deposited topmost on a complete stack (24) forms a top layer (26b).

## Revendications

1. Procédé de palettisation de couches de produits, d'articles et/ou de multipacks (14), dans lequel celles-ci sont empilées successivement les unes sur les autres par couches ou en deux ou plusieurs paquets de couches superposés, dans lequel des couches intermédiaires (26) séparatrices en matériau plat tel que le carton, la feuille en matière plastique ou similaire sont intercalées au-dessous ou au-dessus de couches individuelles et/ou respectivement entre des couches (14) ou paquets de couches individuels, **caractérisé par le fait qu'**à un mouvement d'alimentation latéral, oblique ou en courbe du matériau plat de la couche intermédiaire (26) est superposé un mouvement de levage vertical qui correspond avec un mouvement de dépôt, de levage et/ou latéral d'une couche de produits, d'articles et/ou de multipacks (14) à déposer sur une pile de couches (24) existante ou bien d'un paquet de couches à déposer, et/ou qui est synchronisé au moins par phases avec ce mouvement de dépôt, de levage et/ou latéral.

2. Procédé selon la revendication 1, dans lequel les mouvements d'alimentation pour le matériau plat de la couche intermédiaire (26) et le mouvement de dépôt, de levage et/ou latéral d'une couche de produits, d'articles et/ou de multipacks (14) ou bien d'un paquet de couches à déposer se recouvrent au moins par sections dans l'espace et dans le temps.

3. Procédé selon la revendication 2, dans lequel, en évitant des collisions, le mouvement d'alimentation pour le matériau plat de la couche intermédiaire (26) est accordé avec un mouvement de dépôt, de levage et/ou latéral optimisé dans le temps d'une couche de produits, d'articles et/ou de multipacks (14) ou bien d'un paquet de couches à déposer, et/ou est subordonné à celui-ci.

4. Procédé selon la revendication 2 ou 3, dans lequel les mouvements d'alimentation pour le matériau plat de la couche intermédiaire (26) et le mouvement de dépôt, de levage et/ou latéral d'une couche de produits, d'articles et/ou de multipacks (14) ou bien d'un paquet de couches à déposer sont couplés entre eux par l'intermédiaire d'un système de coordonnées d'axes qui synchronise et/ou priorise les mouvements.

5. Procédé selon l'une quelconque des revendications 1 à 4, dans lequel les couches intermédiaires (26) sont prises séparément d'une pile de couches intermédiaires (34, 44) au moyen d'au moins un bras pivotant (40, 42) guidé par mécanisme de levage, sont déplacées - durant le mouvement de dépôt, de levage et/ou latéral d'une couche de produits, d'articles et/ou de multipacks (14) ou bien d'un paquet de couches à déposer - vers l'emplacement d'empilage (12) de ceux-ci et y sont déposées.

6. Procédé selon l'une quelconque des revendications 1 à 5, dans lequel les couches de produits, d'articles et/ou de multipacks (14) ou bien les paquets de couches transportés sur l'emplacement d'empilage (12) sont déposés au moyen d'un déplacement horizontal et d'un mouvement de dépôt vertical qui suit.

7. Dispositif de palettisation (32) destiné à empiler des couches de produits, d'articles et/ou de multipacks (14) les unes sur les autres en séparant, en recouvrant et/ou en détachant des couches (14) individuelles ou des paquets de couches ayant deux ou plusieurs couches (14), par des couches intermédiaires (26) en matériau plat tel que le carton, la feuille en matière plastique ou similaire, comprenant un dispositif de transport et/ou de dépôt (20) destiné à transporter les couches (14) ou paquets de couches vers un emplacement d'empilage (12) ainsi qu'un dispositif d'alimentation et d'insertion (36) disposé à distance de l'emplacement d'empilage (12) et destiné à amener les couches intermédiaires (26) à l'emplacement d'empilage (12) et à déposer celles-ci au-dessous d'une couche de produits (14), couche d'articles et/ou de multipacks (14) ou bien d'un paquet de couches à déposer après et/ou sur une face supérieure d'une couche de produits (14), couche d'articles et/ou de multipacks (14) ou bien d'un paquet de couches déposé(e) auparavant, **caractérisé par** un dispositif de commande (38) destiné à coordonner les mouvements de transport et de dépôt du dispositif de transport et de dépôt (20) ainsi que les mouvements de levage, de prise, d'alimentation et/ou de dépôt du dispositif d'alimentation et d'insertion (36).

8. Dispositif selon la revendication 7, dans lequel les espaces et/ou phases de mouvement des mouvements d'alimentation pour le matériau plat de la couche intermédiaire (26) et du mouvement de dépôt, de levage et/ou latéral d'une couche de produits, d'articles et/ou de multipacks (14) ou bien d'un paquet de couches à déposer se recouvrent au moins par sections dans l'espace et dans le temps.

9. Dispositif selon la revendication 8, dans lequel ledit dispositif de commande (38) couple entre eux les mouvements d'alimentation pour le matériau plat de la couche intermédiaire (26) et le mouvement de dépôt, de levage et/ou latéral d'une couche de produits, d'articles et/ou de multipacks (14) ou bien d'un paquet de couches à déposer par l'intermédiaire d'un système de coordonnées d'axes qui synchronise et/ou priorise les mouvements.

10. Dispositif selon l'une quelconque des revendications 7 à 9, dans lequel ledit dispositif d'alimentation et d'insertion (36) pour les couches intermédiaires (26) comprend au moins un bras pivotant (40, 42) guidé par mécanisme de levage.

11. Dispositif selon l'une quelconque des revendications 7 à 10, dans lequel le dispositif de transport et/ou de dépôt (20) destiné à transporter les couches (14) ou les paquets de couches comprend une tête de préhension à jalousie ou tête de préhension à plaque ou similaire qui déplace les couches de produits, d'articles et/ou de multipacks (14) ou bien paquets de couches transportés sur ledit emplacement d'empilage (12), d'abord dans la direction horizontale et les dépose ensuite dans un mouvement de dépôt vertical.

12. Dispositif selon l'une quelconque des revendications 7 à 11, dans lequel une couche intermédiaire (26) située au-dessous d'une couche de produits, d'articles et/ou de multipacks (14) déposée tout en dessous forme une couche de fond (26a) et dans lequel une couche intermédiaire (26) déposée tout en haut sur une pile (24) complète forme une couche supérieure (26b).
